# EUROPÄISCHE PATENTSCHRIFT

(11) **EP 2 183 705 B1**
(45) Veröffentlichungstag und Bekanntmachung des Hinweises auf die Patenterteilung: **23.11.2016**
(21) Anmeldenummer: 08801804.9
(22) Anmeldetag: 03.09.2008
(51) Int. Cl.: G06K 19/077

(54) **VERFAHREN ZUR HERSTELLUNG EINES CHIPMODULS**
METHOD OF MANUFACTURING A CHIP MODULE
MÉTHODE DE FABRICATION D'UN MODULE COMPORTANT UN CIRCUIT INTÉGRÉ

(30) Priorität: 04.09.2007 DE 102007041752
(43) Veröffentlichungstag der Anmeldung: 12.05.2010
(73) Patentinhaber: bielomatik Leuze GmbH + Co. KG, 72639 Neuffen (DE)
(72) Erfinder: BOHN, Martin, 72762 Reutlingen (DE)
(74) Vertreter: Greif, Thomas
(86) Internationale Anmeldenummer: PCT/EP2008/007171
(87) Internationale Veröffentlichungsnummer: WO 2009/030463

(56) Entgegenhaltungen:
- EP-A1- 1 375 131
- WO-A-2007/028379
- DE-A1- 19 837 689
- US-A1- 2005 046 573
- US-A1- 2006 044 769
- US-A1- 2007 171 129
- US-B1- 6 297 727

## Beschreibung

Die Erfindung bezieht sich auf ein Chipmodul für ein RFID-System, ein RFID-System mit dem Chipmodul und ein selbstklebendes RFID-Etikett sowie ein Verfahren zu dessen Herstellung.

Bei der Herstellung von RFID-Etiketten werden sogenannte Chipmodule verwendet, die einen RFID-Mikrochip und elektrische Anschlusskontakte aufweisen, mit denen sie mit einer Antenne verbunden werden. Die deutsche Patentanmeldung 10 2006 052 517 beschreibt ein gattungsgemässes Chipmodul, bei dem auf einem bahnförmigen Trägermaterial ein RFID-Chip und eine mit dem RFID-Chip elektrisch, insbesondere galvanisch verbundene Koppelantenne angeordnet ist. Unter Verwendung des Chipmoduls werden RFID-Etiketten hergestellt, bei denen ein auf einer Trägerfolie angeordnetes Chipmodul auf eine flache Sekundärantenne so positioniert aufgeklebt ist, dass die Koppelantenne und die RFID-Antenne induktiv gekoppelt sind. WO 2007/028379 A1, EP 1 375 131 A1, US2007/0171129 A1, US 6,297,727 B1 und US 2006/0044769 A1 offenbaren gattungsgemässe Chipmodule.

In der deutschen Patentanmeldung 10 2007 026 720 ist eine selbstklebende Antenne für ein RFID-System beschrieben, die aus einer Aluminiumfolie einer Stärke von 1 µm - 20 µm, insbesondere ca. 10 µm, ausgestanzt und auf die Vorderseite eines Haftmaterials aufgeklebt ist.

Der Erfindung liegt die Aufgabe zugrunde, ein Verfahren bereit zu stellen, dass die Herstellung eines umweltfreundlichen RFID-Systems mit überwiegend recyclebaren Materialien wie Aluminium und Papier ermöglicht.

Diese Aufgabe wird mit den Merkmalen des Patentanspruchs 1 sowie des Patentanspruchs 2 gelöst.

Vorteilhaft ist bahn- oder bogenförmige Trägermaterial ein Haftmaterial mit einer Tragschicht aus Papier.

Kostengünstig und umweltfreundlich läßt sich die Koppelantenne aus einer Aluminiumfolie ausschneiden, insbesondere aussstanzen.

Alternativ ist auch das Aufdrucken der Koppelantenne mit einer aluminiumhaltigen Druckfarbe möglich.

Mittels eines Verfahren gemäss der Erfindung wird ein RFID-System bei dem die Koppelantenne und eine Sekundärantenne des Systems induktiv gekoppelt sind, bereitgestellt. Besonders vorteilhaft ist auch die Sekundärantenne aus recyclebaren Aluminium hergestellt, und die Antennenfolie für die Sekundärantenne ist ein Haftmaterial mit einer Tragschicht aus ebenfalls recyclebarem Papier. Dies vereinfacht auch die Produktion des Systems, da die Anzahl der verwendeten Materialien begrenzt ist.

Das selbstklebende RFID-Etikett läßt sich vorteilhaft vereinfacht herstellen, da für das Inlay-Material, einschließlich dessen Haftkleberschicht, das selbe Material verwendet wird, wie für das Deckmaterial mit der zugehörigen Haftkleberschicht des Etiketts.

Besonders vorteilhaft läßt sich ein RFID-Etikett herstellen, bei dem für alle Trägermaterialien ein Haftmaterial mit einer Tragschicht aus Papier verwendet wird, wobei das Papier umweltfreundlich recycelt werden kann.

Nachfolgend wird die Erfindung anhand von Ausführungsbeispielen näher erläutert, wobei übereinstimmende Merkmale in den verschiedenen Ausführungsformen mit denselben Bezugszeichen versehen sind. Alternative Merkmale werden durch die Zusätze "a" und "b" unterschieden.
- Figur 1: zeigt ein Chipmodul, das auf einer Trägerfolie befestigt, und dessen Positionierung auf einer Sekundärantenne.
- Figur 2a: zeigt schematisch ein Verfahren zur Herstellung der Koppelantennen für das Chipmodul.
- Figur 2b: zeigt schematisch ein alternatives Verfahren.
- Figur 3a: zeigt in einer Draufsicht die einzelnen Herstellungsstufen der Koppelantenne bei dem Verfahren nach Figur 2a.
- Figur 3b: zeigt die Herstellungsstufen bei den alternativen Verfahren nach Figur 2b.
- Figur 4: zeigt den Aufbau des Aluminium-Haft-Verbundmaterials, aus dem die Koppelantennen hergestellt werden.
- Figur 5: zeigt das Ausstanzen der Koppelantennen.
- Figur 6: zeigt einen Schnitt durch ein Chipmodul.
- Figur 7a: zeigt den Schnitt C-C von Figur 6 bei einer ersten Ausführungsform.
- Figur 7b: zeigt den Schnitt C-C von Figur 6 bei einer zweiten Ausführungsform.
- Figur 8: zeigt die streifenförmige Anordnung der Koppelantennen, bevor der Chip auf ihnen befestigt wird.

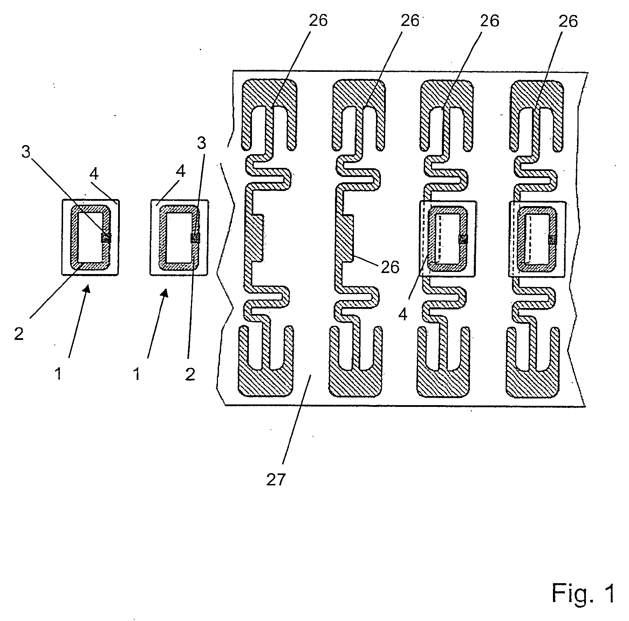

In Figur 1 sind zwei Chipmodule 1 dargestellt, die jeweils eine Koppelantenne 2 und ein auf der Koppelantenne 2 angeordneter RFID-Chip 3 enthalten. Der RFID-Chip 3 ist mit der Koppelantenne elektrisch, insbesondere galvanisch, verbunden. Die Koppelantenne 2 mit dem RFID-Chip 3 ist auf der Oberseite eines bahn- oder bogenförmigen Trägermaterials 4 angeordnet. Das Trägermaterial 4 weist auf seiner Unterseite eine Haftkleberschicht 10 auf, die von einem abziehbaren, bahn- oder bogenförmigen Trennmaterial 6, bevorzugt ein Silikonpapier, abgedeckt ist.

Die Koppelantenne 2 besteht aus einer Aluminiumschicht mit einer Dicke von 1 µm - 20 µm, insbesondere von 3 µm - 12 µm. Im Ausführungsbeispiel beträgt die Dicke der Aluminiumschicht ca. 10 µm. Bevorzugt wird die Koppelantenne 2 aus einer Aluminiumfolie 7 entsprechender Dicke ausgeschnitten. Dies kann, wie im Beispiel dargestellt, durch Ausstanzen erfolgen oder durch Schneiden mit einem Laserstrahl. Alternativ ist es auch möglich, die Koppelantenne 2 auf das Trägermaterial 4 mit einer aluminiumhaltigen Farbe aufzudrucken.

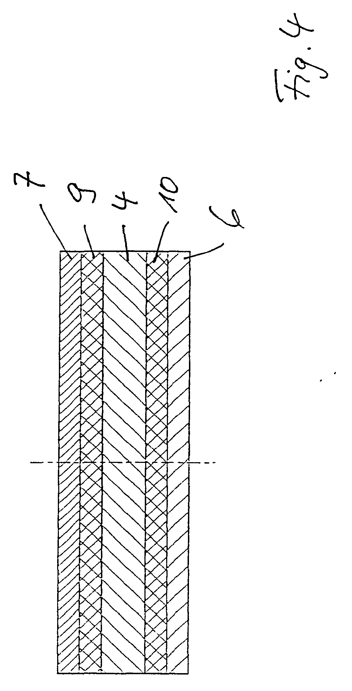

Das Trägermaterial 4 enthält eine Tragschicht, die bevorzugt aus Papier hergestellt ist. Ebenso kann das Trägermaterial 4 aus einem Kunststoff wie PP oder PE hergestellt werden. Bevorzugt wird als Ausgangsmaterial für die Herstellung des Chipmoduls ein bahn- oder bogenförmiges Aluminium-Haft-Verbundmaterial verwendet, dessen Aufbau in Figur 4 dargestellt ist:
Auf der Oberseite eines bahn- oder bogenförmigen Trägermaterials 4 aus Papier ist eine Aluminiumfolie 7 mittels einer Klebeschicht 9 festgeklebt. Auf der Unterseite der Papierschicht 4 ist eine Trennfolie aus Silikonpapier 6 mittels einer Klebeschicht 10 abziehbar aufgeklebt. Aus diesem Aluminium-Haft-Verbundmaterial werden zunächst die Koppelantennen 2 auf die nachfolgend beschriebene Weise ausgestanzt.

Das Aluminium-Haft-Verbundmaterial besteht aus einer Aluminiumfolie 7 mit einer Dicke von 1 µm - 20 µm, insbesondere 3 µm - 12 µm, im Beispiel ca. 10 µm, einem Trägermaterial aus Papier mit einer Stärke zwischen 50 g/m² - 90 g/m² , im Beispiel 70 µm, und einer Trennfolie aus Silikonpapier mit einer Dicke von 50 µm - 60 µm. Die Klebstoffschicht 9 unterhalb der Aluminiumfolie 7 hat eine Dicke von 3 µm - 7 µm, im Beispiel ca. 5 µm, und die Kleberschicht 10 auf der Unterseite der Trägerfolie 4 aus Papier hat eine Dicke zwischen 15 µm und 25 µm, im Beispiel von 20 µm.

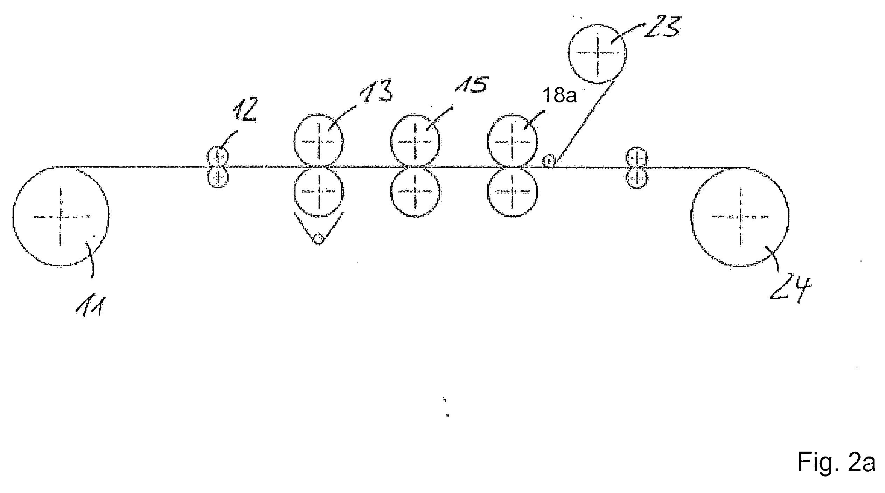

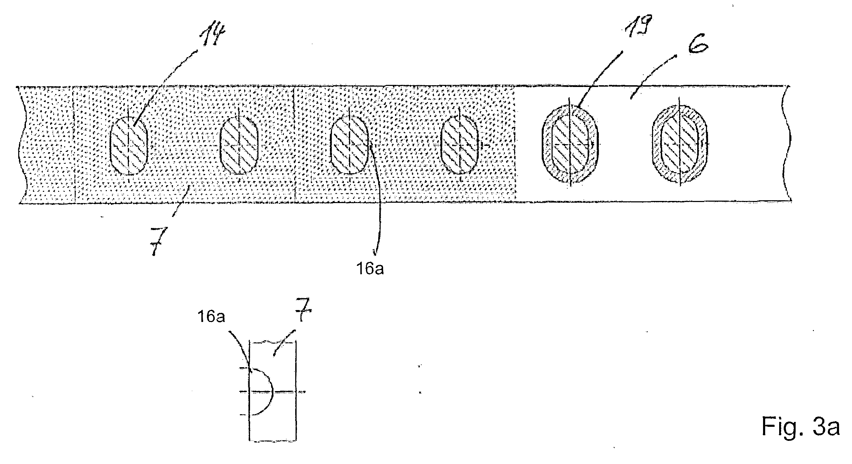

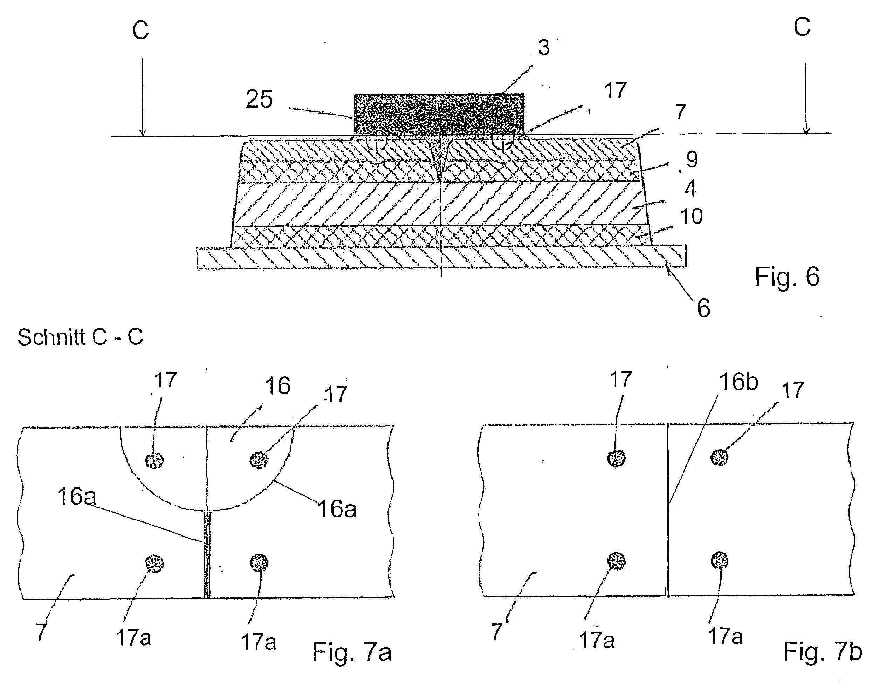

Wie in Figur 2a dargestellt, wird das Aluminium-Haft-Verbundmaterial von einer Rolle 11 mittels Vorzugswalzen 12 abgezogen und einer nachfolgenden Lochstanze 13 zugeführt. Mittels der Lochstanze 13 wird die Innenkontur 14 der Koppelantenne 2 mit einem durch alle Schichten des Aluminium-Haft-Verbundmaterials gehenden Schnitt ausgestanzt. Wie in Figur 3a links ersichtlich, befindet sich dann in der Mitte eines Streifens ein von der Innenkontur 14 begrenztes Loch im Verbundmaterial. Der beim Stanzen entstehende Schnittabfall wird entfernt, im Beispiel abgesaugt. In einer nachfolgend angeordneten weiteren Stanzeinrichtung 15 wird anschließend die Kontaktstelle 16a für den RFID-Chip ausgestanzt. Bei diesem Stanzen reicht der Schnitt zumindest durch die Aluminiumfolie 7 und die darunter befindliche Klebeschicht 9, wobei das Trägermaterial 4 nicht vollständig durchgetrennt wird. Dieser Stanzschritt hat die Aufgabe, die vorher in sich geschlossene Koppelantenne 2 mittels eines Trennschnitts aufzutrennen, so dass kein elektrischer Kurzschluss auftritt. Gleichzeitig wird eine nicht leitende Zone aus der Aluminiumfolie 7 ausgeschnitten, in der sogenannte stützende Bumps des Chips 3 angeordnet werden können. Die bei diesem Stanzvorgang in der Aluminiumfolie 7 freigelegten Bereiche sind in Figur 7a dargestellt.

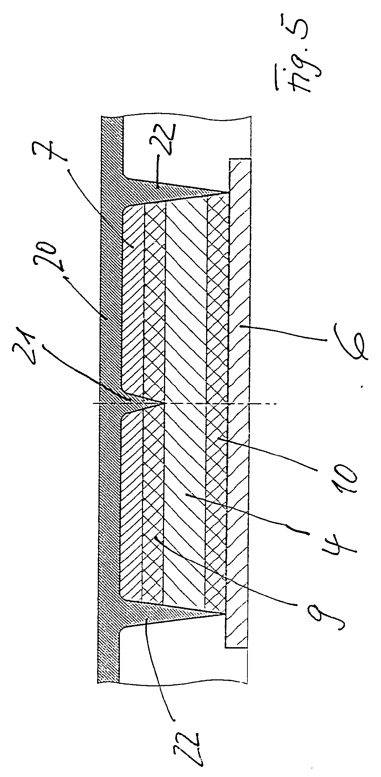

Im Anschluß an die Stanzeinrichtung 15 ist eine weitere Stanzeinrichtung 18a angeordnet, mittels der die Außenkontur 19 der Koppelantenne 2 ausgeschnitten wird. Bei diesem Stanzvorgang reicht der Schnitt bis an die Trennfolie 6. In Figur 2a sind die Stanzvorgänge für die Kontaktstelle und für die Außenkontur in zwei Schritten dargestellt. Die beiden Stanzvorgänge können jedoch auch mit einem einzigen rotierenden Werkzeug durchgeführt werden, wie in Figur 5 dargestellt ist. Das Stanzwerkzeug 20 enthält dann zwei verschieden tief schneidende Stanzmesser 21, 22, wobei das Stanzmesser 21 die Kontaktstelle 16 mit einem bis an das als Trägermaterial verwendete Papier 4 reichenden Schnitt ausschneidet, und die Stanzmesser 22 die Außenkontur mit einem Schnitt ausschneidet, der bis an die Trennfolie 6 reicht.

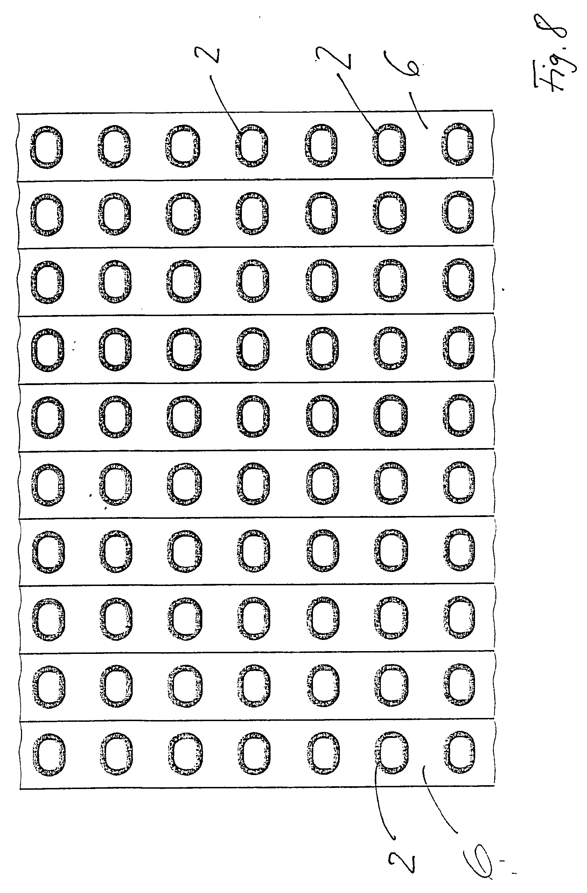

Nach dem Ausstanzen in der Stanzeinrichtung 18a wird das Stanzgitter entfernt und auf eine Rolle 23 aufgewickelt. Die Trennfolie 6 mit den darauf befindlichen Koppelantennen 2 wird zu einer Rolle 24 aufgewickelt. Wie in Figur 8 dargestellt, sind die Koppelantennen 2 mit Abstand hintereinander auf der Trennfolie 6 angeordnet. Diese ist wiederum in Streifenform aufgebaut, so dass die Koppelantennen 2 in mehreren Spuren und jeweils hintereinander der nachfolgenden Verarbeitung zugeführt werden können. In dem nachfolgenden Verarbeitungsschritt wird auf jeder Koppelantenne 2 ein RFID-Chip 3 befestigt, wie in Figur 6 dargestellt ist.

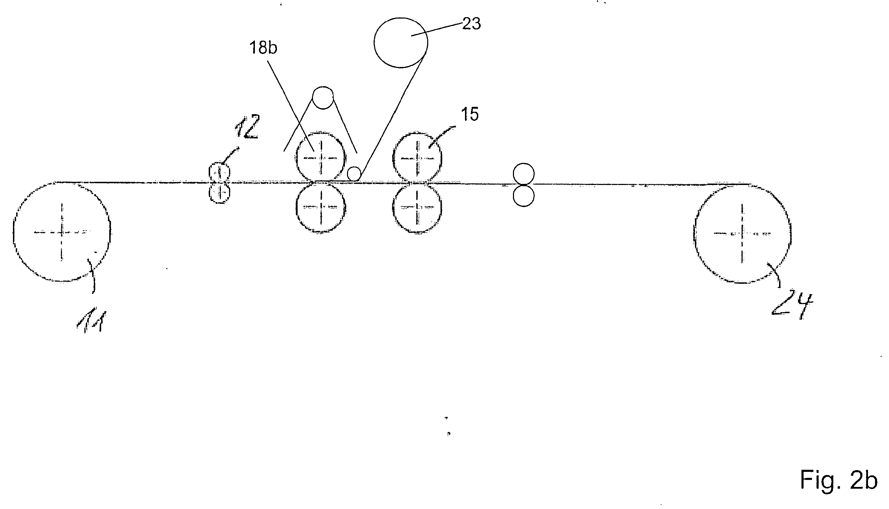

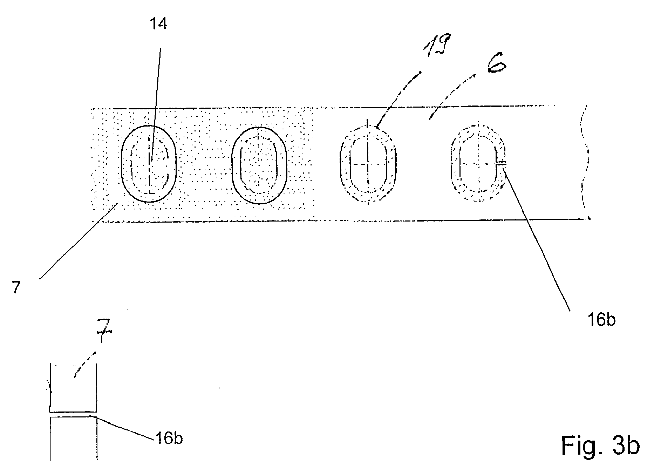

In Figur 2b ist ein alternatives Verfahren dargestellt, bei dem die Innenkontur 14 und die Außenkontur 19 der Koppelantenne 2 in einem Schnitt ausgestanzt werden, der bis an die Trennfolie 6 reicht. Die Innenkontur 14 wird dabei von dem Stanzzylinder 18b mitgenommen und abgesaugt und kann anschließend entsorgt werden. Anschließend wird in der Stanzeinrichtung 15 die Kontaktstelle 16 für den RFID-Chip 3 ausgestanzt, der nach diesem Ausführungsbeispiel - wie in den Figuren 3b und 7b dargestellt ist - als gerader Schnitt 16 b so eine gerade Trennfuge bildet.

Wie in den Figuren 6 und 7a, 7b dargestellt, stellt die Aluminiumfolie 7 in der obersten Schicht die Leiterbahn der Koppelantenne 2 dar. Beim Bestücken mit Chips 3 werden die als "Bumps" 17 bezeichneten Chipfüße in die Aluminiumfolie 7 und ggf. in die darunter liegende Klebeschicht 9 eingedrückt. Es entsteht so ein gewisser Formschluss für die galvanische Kontaktierung der Bumps 17. Mit den Kontaktstellen der Koppelantenne 2 wird vor der Bestückung ein Klebstoff 25 aufgetragen, der den Chip 3 auf Position hält. Dieser Klebstoff 25 ist normalerweise ein teurer leitfähiger Klebstoff mit Silberpartikeln als leitfähiger Substanz.

In Figur 7a ist eine Ausführungsform dargestellt, bei der die Kontaktstelle 16a eine etwa halbkreisförmige Aussparung enthält, die aus der Aluminiumfolie 7 ausgestanzt ist. Der Kontakt der Aluminiumfolie 7 mit dem RFID-Chip erfolgt über die unteren Bumps 17a, die zur Vermeidung eines elektrischen Kurzschlusses durch einen weiteren Trennschnitt 16a in der Aluminiumfolie 7 elektrisch voneinander getrennt sind.

In Figur 7b ist eine vorteilhafte alternative Möglichkeit dargestellt, die Kontaktstelle 16 zwischen der aus der Alufolie 7 ausgestanzten Koppelantenne 2 und dem RFID-Chip 3 zu gestalten. Bei dieser Ausführungsform haben die beiden oberen Bumps 17 ausschließlich eine den Chip 3 stützende Funktion, sie sind nicht elektrisch leitend mit dem Chip 3 verbunden. Der elektrische Kontakt erfolgt über die beiden unteren Bumps 17a. Die beiden Kontaktbumps 17a sind durch einen geradlinigen Schnitt 16b elektrisch voneinander getrennt. Beim Ausstanzen des geradlinigen Schnitts 16b werden die beiden Ränder der Folie 7 auseinander gebördelt, so dass sich eine Trennfuge bildet, die sicher einen Kontakt vermeidet. Falls für die Isolationswirkung erforderlich, kann zusätzlich ein isolierender Klebstoff in die Trennfuge 16b eingedrückt werden, der nach dem Aushärten die beiden Ränder der Folie 7 sicher auf Abstand hält. Dieser Kunststoff kann vorteilhaft gleichzeitig dazu verwendet werden, die Bumps 17 und somit den RFID-Chip 3 sicher auf der Folie 7 zu befestigen.

Die Erfindung ermöglicht es, den Klebstoff 25 durch einen nicht leitenden, kostengünstigen Klebstoff zu ersetzen. Dabei ist zu beachten, dass eine eventuell auftretende Oxydschicht des Aluminiums an den Kontaktstellen der Koppelantenne 2 den elektrischen Kontakt nicht störend behindert. Um das Auftreten einer störenden Oxydschicht von vorneherein zu verhindern, kann über der Aluminiumfolie 7 eine hauchdünne Schicht aus Schutzlack als Oxidationsschutz aufgetragen werden. Der Schutzlack ist dabei von seiner Konsistenz und seiner Haftung auf dem Aluminium so gewählt, dass er bei der Kontaktierung, also beim Aufsetzen des Chips 3 auf die Kontaktstellen der Koppelantenne 2, aufbricht und eine nicht oxidierte Kontaktfläche für eine galvanische Verbindung freigibt.

Das Chipmodul 1 mit dem Chip 3 kann bereits in einem sehr engen Nahbereich als RFID-System verwendet werden, da die Koppelantenne 2 als UHF-Antenne wirkt. Für größere Reichweiten wird das Chipmodul 1 mit seinem Trägermaterial 4 auf eine flache Sekundärantenne 26 so positioniert aufgeklebt, dass die Koppelantenne 2 und die Sekundärantenne 26 induktiv gekoppelt sind. Die Sekundärantennen 26 sind dabei auf der Oberseite eines Trägermaterials angeordnet, wobei als Trägermaterial bevorzugt ein Haftmaterial mit einer Tragschicht aus Papier verwendet wird. Alternativ kann für die Tragschicht auch ein Kunststoff wie PE oder PP verwendet werden. Bevorzugt ist - wie in Figur 1 dargestellt - die Haftkleberschicht des Trägermaterials von einem bahn- oder bogenförmigen Trennmaterial 27 abgedeckt. Die Sekundärantennen 26 sind somit auf der Oberseite des Trennmaterials 27 angeordnet. Bevorzugt wird auch die Sekundärantenne 26 aus einer Aluminiumschicht mit einer Dicke von 1 µm - 20 µm, insbesondere von 3 µm - 12 µm, im Beispiel ca. 10 µm, hergestellt. Ähnlich wie die Koppelantenne 2 wird die Sekundärantenne 26 dabei bevorzugt aus einer entsprechend dicken Aluminiumfolie ausgeschnitten, insbesondere ausgestanzt. Bevorzugt wird als Trägermaterial für die Sekundärantenne 26 ebenso wie für die Koppelantenne 2 ein Haftmaterial mit einer Tragschicht aus Papier verwendet, um die Anzahl der verwendeten Materialien gering zu halten und bei Bedarf gleiche Materialien zu verwenden.

Die aus dem Chipmodul und der Sekundärantenne bestehenden RFID-Systeme werden bevorzugt zur Herstellung von selbstklebenden RFID-Etiketten verwendet. Dabei wird ein RFID-System als RFID-Inlay zwischen einem bahn- oder bogenförmigen, auf der Unterseite mit einer Haftkleberschicht versehenen Deckmaterial und einem bahn- oder bogenförmigen Trägermaterial angeordnet, das von der Haftkleberschicht abziehbar ist. Bevorzugt wird dabei als Trägermaterial für das RFID-Inlay, einschließlich dessen Haftkleberschicht, dasselbe Material verwendet, wie für das Deckmaterial mit der Haftkleberschicht des Etiketts. Besonders bevorzugt wird für alle Trägermaterialien ein Haftmaterial mit einer Tragschicht aus Papier verwendet. Somit wird für die Herstellung des RFID-Etiketts nur Papier und Aluminium verwendet, letzteres für die Antennen.

## Patentansprüche

1. Verfahren zur Herstellung eines Chipmoduls für ein RFID-System mit einem bahn- oder bogenförmigen Trägermaterial (4), auf dessen Oberseite eine Koppelantenne (2) und einen mit der Koppelantenne (2) elektrisch verbundener RFID-Chip (3) angeordnet ist und das auf seiner Unterseite mit einer Haftkleberschicht (9) versehen ist, wobei die Koppelantenne (2) aus einer Aluminiumschicht (7) mit einer Dicke von 1 µm - 20 µm. insbesondere von 3 µm - 12 µm besteht, **dadurch gekennzeichnet, dass** ausgehend von einem bahn- oder bogenförmigen Aluminium-Haft-Verbundmaterial, das aus einer auf ein Trägermaterial (4) mit einer auf der Oberseite aufgeklebten Aluminiumfolie (7) und einer auf die Unterseite aufgeklebten Trennfolie (6), insbesondere aus Silikonpapier, besteht, zunächst
- die Innenkontur (14) der Koppelantenne (2) mit einem durch alle Schichten des Haftverbundmaterials gehenden Schnitt ausgeschnitten, insbesondere ausgestanzt, wird und der Schnittabfall entfernt wird,
- und anschließend die Kontaktstelle (16) für den RFID-Chip (3) mittels eines Schnitts, der durch die Aluminiumfolie (7) und die darunter befindliche Klebeschicht (9) reicht, sowie die Außenkontur (19) der Koppelantenne (2) mittels eines Schnitts, der ohne Durchschneiden der Trennfolie (6) ausgeschnitten wird, und
- danach der Schnittabfall entfernt wird.

2. Verfahren zur Herstellung eines Chipmoduls für ein RFID-System mit einem bahn- oder bogenförmigen Trägermaterial (4), auf dessen Oberseite eine Koppelantenne (2) und einen mit der Koppelantenne (2) elektrisch verbundener RFID-Chip (3) angeordnet ist und das auf seiner Unterseite mit einer Haftkleberschicht (9) versehen ist, wobei die Koppelantenne (2) aus einer Aluminiumschicht (7) mit einer Dicke von 1 µm - 20 µm, insbesondere von 3 µm - 12 µm besteht, **dadurch gekennzeichnet, dass** ausgehend von einem bahn- oder bogenförmigen Aluminium-Haft-Verbundmaterial, das aus einer auf ein Trägermaterial (4) mit einer auf der Oberseite aufgeklebten Aluminiumfolie (7) und einer auf die Unterseite aufgeklebten Trennfolie (6), insbesondere aus Silikonpapier, besteht,
- die Innenkontur (14) und die Außenkontur (19) der Koppelantenne mit einem Schnitt, der bis an die Trennfolie (6) reicht, durchgeschnitten wird,
- anschließend der Abfall der Innenkontur (14) entfernt, bevorzugt abgesaugt, wird, und
- danach an der Kontaktstelle (16) des RFID-Chip (3) ein isolierender Schnitt (16a, 16b) angebracht wird.

3. Verfahren nach Anspruch 1 oder 2, **dadurch gekennzeichnet, dass** die Innenkontur (14) und die Außenkontur (19) der Koppelantenne (2), sowie die Kontaktstelle (16) für den RFID-Chip (3) ausgestanzt wird.

4. Verfahren nach einem der Ansprüche 1 bis 3, **dadurch gekennzeichnet, dass** der isolierende Schnitt an der Kontaktstelle (16) als geradliniger Schnitt (16b) ausgeführt wird.

5. Verfahren nach einem der Ansprüche 1 bis 4, **dadurch gekennzeichnet, dass** ein Aluminium-Haft-Verbundmaterial verwendet wird, das aus einer Aluminiumfolie (7) mit einer Dicke von 1 µm - 20 µm, insbesondere von 3 µm - 12 µm, einem Trägermaterial (4) aus Papier mit einer Stärke zwischen 50 g/m² - 90 g/m² und einer Trennfolie (6) aus Silikonpapier mit einer Dicke von 50 µm - 60 µm besteht, wobei die Aluminiumfolie (7) auf dem Trägermaterial (4) mittels einer Klebstoffschicht (9) von 3 µm - 7 µm Dicke und auf der Unterseite des Trägermaterials (4) die Silikonträgerfolie (6) mittels einer Klebstoffschicht (10) zwischen 15 µm und 25 µm aufgeklebt ist.

6. Verfahren nach einem der vorhergehenden Ansprüche, **dadurch gekennzeichnet, dass** als bahn- oder bogenförmiges Trägermaterial (4) ein Haftmaterial mit einer Tragschicht aus Papier verwendet wird.

## Claims

1. Method of manufacturing a chip module for an RFID system having a web or sheet carrier material (4), on the upper side of which there are mounted a coupling antenna (2) and an RFID chip (3) electrically connected to the coupling antenna (2), and which is provided with a contact adhesive layer (9) on its underside, the coupling antenna (2) comprising an aluminium layer (7) with a thickness of 1 µm - 20 µm, in particular of 3 µm - 12 µm, **characterized in that,** starting from a web or sheet aluminium-adhesive composite material, which comprises a on a carrier material (4) with an aluminium foil (7) stuck onto the upper side and a release film (6), in particular of silicone paper, stuck onto the underside, firstly
- the inner contour (14) of the coupling antenna (2) is cut out, in particular punched out, with a cut going through all the layers of the adhesive composite material, and the cutting waste is removed,
- and then the contact point (16) for the RFID chip (3) is cut out by means of a cut which reaches through the aluminium foil (7) and the adhesive layer (9) located underneath, and the outer contour (19) of the coupling antenna (2) is cut out by means of a cut without cutting through the release film (6), and
- after that the cutting waste is removed.

2. Method of manufacturing a chip module for an RFID system having a web or sheet carrier material (4), on the upper side of which there are mounted a coupling antenna (2) and an RFID chip (3) electrically connected to the coupling antenna (2), and which is provided with a contact adhesive layer (9) on its underside, the coupling antenna (2) comprising an aluminium layer (7) with a thickness of 1 µm - 20 µm, in particular of 3 µm - 12 µm, **characterized in that,** starting from a web or sheet aluminium-adhesive composite material, which comprises a on a carrier material (4) with an aluminium foil (7) stuck onto the upper side and a release film (6), in particular of silicone paper, stuck onto the underside,
- the inner contour (14) and the outer contour (19) of the coupling antenna are cut through with a cut which reaches as far as the release film (6),
- then the waste from the inner contour (14) is removed, preferably sucked away, and
- after that an insulating cut (16a, 16b) is applied at the contact point (16) of the RFID chip (3).

3. Method according to Claim 1 or 2, **characterized in that** the inner contour (14) and the outer contour (19) of the coupling antenna (2) and also the contact point (16) for the RFID chip (3) are punched out.

4. Method according to one of Claims 1 to 3, **characterized in that** the insulating cut at the contact point (16) is made as a straight cut (16b).

5. Method according to one of Claims 1 to 4, **characterized in that** use is made of an aluminium-adhesive composite material which comprises an aluminium foil (7) with a thickness of 1 µm-20 µm, in particular of 3 µm-12 µm, a carrier material (4) of paper with a weight between 50 g/m²-90 g/m² and a release film (6) of silicone paper with a thickness of 50 µm-60 µm, wherein the aluminium foil (7) is stuck on the carrier material (4) by means of an adhesive layer (9) of 3 µm-7 µm thickness and, on the underside of the carrier material (4), the silicone carrier film (6) is stuck by means of an adhesive layer (10) between 15 µm and 25 µm.

6. Method according to one of the preceding claims, **characterized in that** an adhesive material with a carrier layer made of paper is used as the web or sheet carrier material (4).

## Revendications

1. Procédé de fabrication d'un module à puce pour un système RFID avec un matériau porteur (4) en forme de bande ou de feuille, sur le côté supérieur duquel est disposée une antenne de couplage (2) et une puce RFID (3) reliée électriquement à l'antenne de couplage (2) et lequel est pourvu d'une couche autoadhésive (9) sur son côté inférieur, l'antenne de couplage (2) se composant d'une couche en aluminium (7) ayant une épaisseur de 1 µm à 20 µm, notamment de 3 µm à 12 µm, **caractérisé en ce qu'**à partir d'un matériau composite adhésif à base d'aluminium en forme de bande ou de feuille, lequel se compose d'une sur un matériau porteur (4) muni d'un film en aluminium (7) collé sur le côté supérieur et d'un film de séparation (6), notamment en papier de silicone, collé sur le côté inférieur,
- le contour intérieur (14) de l'antenne de couplage (2) est tout d'abord découpé avec une coupe qui passe à travers toutes les couches du matériau autoadhésif, notamment découpé à la matrice, et la chute de coupe est retirée,
- et le point de contact (16) pour la puce RFID (3) est ensuite découpé au moyen d'une coupe qui s'étend à travers le film en aluminium (7) et la couche adhésive (9) qui se trouve au-dessous, ainsi que le contour extérieur (19) de l'antenne de couplage (2) au moyen d'une coupe qui est pratiquée sans traverser le film de séparation (6), et
- la chute de coupe est ensuite retirée.

2. Procédé de fabrication d'un module à puce pour un système RFID avec un matériau porteur (4) en forme de bande ou de feuille, sur le côté supérieur duquel est disposée une antenne de couplage (2) et une puce RFID (3) reliée électriquement à l'antenne de couplage (2) et lequel est pourvu d'une couche autoadhésive (9) sur son côté inférieur, l'antenne de couplage (2) se composant d'une couche en aluminium (7) ayant une épaisseur de 1 µm à 20 µm, notamment de 3 µm à 12 µm, **caractérisé en ce qu'**à partir d'un matériau composite adhésif à base d'aluminium en forme de bande ou de feuille, lequel se compose d'une sur un matériau porteur (4) muni d'un film en aluminium (7) collé sur le côté supérieur et d'un film de séparation (6), notamment en papier de silicone, collé sur le côté inférieur,
- le contour intérieur (14) et le contour extérieur (19) de l'antenne de couplage sont découpés avec une coupe qui s'étend jusqu'au film de séparation (6),
- la chute du contour intérieur (14) est ensuite retirée, de préférence aspirée, et
- une coupe isolante (16a, 16b) est ensuite appliquée au niveau du point de contact (16) de la puce RFID (3).

3. Procédé selon la revendication 1 ou 2, **caractérisé en ce que** le contour intérieur (14) et le contour extérieur (19) de l'antenne de couplage (2) ainsi que le point de contact (16) pour la puce RFID (3) sont découpés à la matrice.

4. Procédé selon l'une des revendications 1 à 3, **caractérisé en ce que** la coupe isolante au niveau du point de contact (16) est réalisée sous la forme d'une coupe rectiligne (16b).

5. Procédé selon l'une des revendications 1 à 4, **caractérisé en ce qu'**un matériau composite adhésif à base d'aluminium est utilisé, lequel se compose d'un film en aluminium (7) ayant une épaisseur de 1 µm à 20 µm, notamment de 3 µm à 12 µm, d'un matériau porteur (4) en papier ayant une épaisseur entre 50 g/m² et 90 g/m² et un film de séparation (6) en papier de silicone ayant une épaisseur de 50 µm à 60 µm, le film en aluminium (7) étant collé sur le matériau porteur (4) au moyen d'une couche d'adhésif (9) de 3 µm à 7 µm d'épaisseur et le film porteur en silicone (6) étant collé sur le côté inférieur du matériau porteur (4) au moyen d'une couche d'adhésif (10) entre 15 µm et 25 µm.

6. Procédé selon l'une des revendications précédentes, **caractérisé en ce que** le matériau porteur (4) en forme de bande ou de feuille utilisé est un matériau adhésif muni d'une couche porteuse en papier.
